# DEMANDE DE BREVET EUROPEEN

(11) **EP 0 795 388 A1**
(43) Date de publication de la demande: **17.09.1997**
(21) Numéro de dépôt: 97870034.2
(22) Date de dépôt: 12.03.1997
(51) Int. Cl.: B29C 47/88

(54) **Procédé et dispositif pour le refroidissement interne de tuyaux en matière plastique**

(30) Priorité: 13.03.1996 BE 9600220
(71) Demandeur: Kabelwerk Eupen AG Câblerie d'Eupen SA Kabelfabriek Eupen NV, B-4700 Eupen (BE)
(72) Inventeur: Pelzer, Rudolf, 52134 Herzogenrath (DE)
(74) Mandataire: Overath, Philippe

(57) **Abrégé**

Lors de la fabrication du tuyau à l'aide d'une tête d'extrusion latérale, on projette, tout près de la surface intérieure de la paroi (3) du tuyau en formation, un gaz de refroidissement primaire suivant un trajet en substance perpendiculaire par rapport à cette surface. Cette projection peut s'effectuer de façon immobile ou de façon mobile pendant l'avancement du tuyau (3) en cours de formation à la sortie de l'extrudeuse.

Cette projection est réalisée à l'aide d'une série de moyens de projection (11,23) uniformément répartis sur un canal (8) cylindrique qui s'étend axialement à l'intérieure du tuyau (3) en formation.

## Description

La présente invention se rapporte à un procédé et un dispositif pour refroidir la paroi d'un tuyau en matière plastique lors de son extrusion, en particulier pour le refroidissement de la surface intérieure de tuyaux à paroi épaisse de haute qualité.

La nécessité de coupler, lors de l'extrusion, au refroidissement externe classique de tuyaux en plastique à paroi épaisse, un refroidissement interne efficace a déjà été soulignée à maintes reprises. La littérature spécialisée décrit une multitude de procédés et de dispositifs qui n'ont toutefois pas encore fourni à ce jour une solution applicable et satisfaisante sur les plans technique et économique. Ainsi, le brevet belge 09300171 de la Demanderesse propose le refroidissement interne à l'aide de dispersions successives d'un réfrigérant. Le procédé proposé dans ce brevet, bien que fort valable, pourra encore être amélioré. En général, les procédés suivant l'état de la technique ont buté sans cesse sur des problèmes divers: effet réfrigérant insuffisant, refroidissement asymétrique, inapplicable dans certains cas, fortes altérations optiques ou gauchissements de la surface intérieure de la paroi des tuyaux.

Il est en effet impératif que l'on obtienne, lors d'un refroidissement interne efficace d'un tuyau, une atténuation maximale et distribution favorable des contraintes dans la paroi du tube; en outre, il faudra un refroidissement rapide de la surface intérieure de la paroi, ainsi qu'un refroidissement rapide des couches internes de la paroi.

L'air atmosphérique fait figure d'agent de refroidissement idéal. En effet, il est disponible partout, techniquement facile à mettre en oeuvre et inoffensif en cas de pannes ou de défectuosités. Mais l'application d'un procédé basé sur l'air atmosphérique sur des tuyaux à parois épaisses n'a pas donné de satisfaction.

Ainsi par exemple, l'abrégé de la demande de brevet japonais JP-A-62-140816 mentionne le soufflage d'air sur la surface intérieure d'un tuyau en matière plastique fabriqué par extrusion. Suivant cette publication, on souffle toutefois de l'air en vue d'étendre le tuyau en formation. L'air soufflé sous pression exerce une pression entre la paroi du tuyau mais ne donne en substance pas d'effet de refroidissement. Le refroidissement demande en effet que l'air soit projeté sous des conditions bien spécifiques, telles que vitesse, débit, direction, multiples endroits, action répétitive, etc.

Pour l'utilisation de l'air atmosphérique comme agent de refroidissement, il est indispensable de tenir compte des conditions techniques suivantes :
- les quantités d'air de refroidissement à mettre en oeuvre sont importantes, car la chaleur spécifique de l'air est relativement faible.
- le taux d'utilisation du potentiel de refroidissement du volume d'air amené doit être élevé; autrement dit, il faudrait que la majeure partie de ce volume participe à un échange intensif de chaleur avec la surface intérieure, très chaude, de la paroi du tube.
- l'échange de chaleur devrait être aussi intensif que possible, c'est-à-dire qu'il faut s'efforcer d'atteindre le coefficient de la transmission thermique (C.T.T.) le plus élevé possible.
- le parcours de refroidissement interne devrait être aussi long que possible afin de pouvoir extraire de la paroi du tube la quantité de chaleur nécessaire pour arriver à un refroidissement interne efficace, compte tenu de la mauvaise conduction thermique des matières plastiques et de la forte épaisseur de la paroi des tubes concernés.

L'invention a pour objet un procédé et un dispositif qui remplit les conditions précitées requises pour obtenir un refroidissement interne efficace à l'air.

Selon l'invention, on refroidit le tuyau produit à la sortie de l'extrudeuse sur sa surface intérieure en projetant de l'air, en substance perpendiculairement, tout près de la surface intérieure à l'aide de moyens pouvant s'introduire à l'intérieur d'une tête d'extrusion latérale, également appelé tête "off-set". L'air est projeté par une série d'orifices, uniformément répartis sur la circonférence d'un canal se trouvant à l'intérieur du tuyau en formation. Ce canal est conçu de façon à éviter des pertes de charges pouvant influencer le potentiel de refroidissement de l'air. Avantageusement, ce canal aura un diamètre qui est plus grand près de l'extrudeuse et qui diminue sur au moins une partie du canal le long de la zone de refroidissement.

On crée ainsi une espace annulaire, pour l'écoulement de l'air projeté sur la surface interne du tuyau, qui s'accentue, au moins en partie, vers la zone d'évacuation de l'air.

Le diamètre du canal intérieur peut diminuer suivant une constante et donc former un cône ou peut également diminuer graduellement et former des paliers.

L'air peut être projeté à l'aide d'un grand nombre de buses de soufflage, ajutages, tuyères ou injecteurs, placés radialement sur une structure (canal) interne. Ces buses (ajutages) peuvent être de type classique avec un orifice de sortie réduit ou peuvent être formées de deux disques présentant un passage annulaire (circulaire) réduit.

Pour la simplicité du texte, on utilisera par la suite les termes "ajutage" et "passage annulaire"; par "ajutage" on entend un injecteur classique, c'est-à-dire une buse avec orifice de sortie réduit, et par "passage annulaire" on entend la fente circulaire formée par deux disques.

Selon l'invention, le canal interne avec ses ajutages pourra être positionné de manière immobile ou fixe à l'intérieure du tuyau en formation. Selon d'autres formes de réalisations le canal interne pourra se déplacer à l'intérieur du tuyau en formation selon un mouvement d'oscillation axiale, c'est-à-dire un mouvement axial de va et vient ou être mue par un mouvement rotatif tel qu'un mouvement d'oscillation circonférentielle et, avantageusement, le mouvement de va et vient sera combiné avec un mouvement d'oscillation rotative partielle. Lorsque le canal est équipé exclusivement de passages annulaires, le mouvement d'oscillation rotatif n'est pas nécessaire.

Avec un refroidissement de ce type on obtient:
- une amélioration sensible de la résistance à la pression interne ainsi qu'au fluage dans le temps des tuyaux à paroi épaisse communément utilisés comme conduites sous haute pression;
- une réduction de la valeur de retrait résiduel;
- une prévention d'excentricités internes ou de variations de l'épaisseur de la paroi qui dans les procédés de refroidissement extérieure habituels résultant de la gravité agissant sur la masse de matière plastique qui reste en fusion assez longtemps à l'intérieur de tubes de grands dimensions;
- une prévention d'une dégradation oxydative des molécules de matière plastique de la face interne de la paroi du tube;
- un raccourcissement considérable des parcours de refroidissement, en particulier avantageux pour des installations à grand débit dans des halls existants relativement courts.

L'invention sera décrite ci-après plus en détail à l'aide d'exemples de mise en application en se référant aux dessins annexés, qui représentent:
- la figure 1 : une coupe longitudinale schématique d'un dispositif suivant l'invention;
- les figures 2 et 3 : des coupes transversales suivant respectivement les lignes de coupes A-A et B-B de la figure 1;
- La figure 2A : un agrandissement d'un détail de la figure 2;
- les figures 4, 5 et 6 : des variantes de configurations possibles des ajutages;
- la figure 7 : une coupe longitudinale schématique d'une deuxième exécution d'un dispositif suivant l'invention;
- les figures 8 et 9 : des coupes transversales suivant respectivement les lignes de coupes C-C et D-D de la figure 7;
- la figure 8A : une coupe longitudinale suivant la ligne de coupe X-X de la figure 8;
- La figure 8B : un agrandissement d'un détail de la figure 8A.

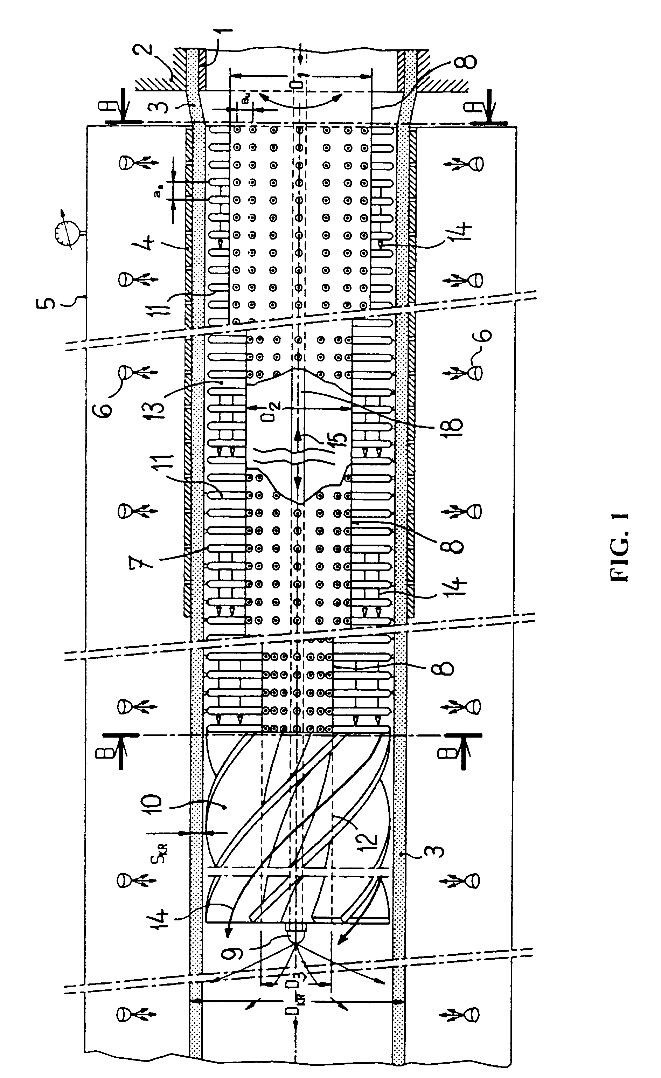

En se référant à la figure 1, elle montre la masse plastifiée de matière plastique acheminée en continu par une extrudeuse avec tête d'extrusion latérale ou "off-set" (non représentée) et préformée par un moule à injection composé d'un mandrin creux 1 et d'une matrice 2 de la tête d'extrusion latérale pour être transformée en tuyau 3. Le tuyau 3 formé est introduit dans un calibre 4 du bassin de calibrage sous dépression 5 dans lequel il reçoit son diamètre extérieur exact. La surface externe du tuyau 3 est alors aspergée intensivement d'eau de refroidissement à l'aide de moyens de pulvérisation 6 disposés l'un derrière l'autre dans le sens longitudinal. La surface externe du tuyau étant refroidie, le tuyau 3 est ainsi rendu indéformable. Ce refroidissement externe est poursuivi dans un bassin qui suit la partie de calibrage 5.

La tête d'extrusion latérale est équipée d'un mandrin creux 1 ou d'un mandrin présentant une forure traversante. Cette dernière est nécessaire pour insérer le dispositif de refroidissement interne dans le tuyau à refroidir par l'amont, c'est-à-dire du côté extrudeuse. Le dispositif de refroidissement interne comprend une structure 8 telle qu'un canal pourvu d'une série d'ajutages 11 uniformément réparti sur sa surface périphérique. La structure ou canal 8, qui sert à amener l'air de refroidissement, se trouve à l'intérieur du mandrin creux 1 et pénètre librement à l'intérieur du tuyau 3. Avantageusement, le diamètre du canal 8 d'amenée d'air est réduit par paliers à partir de l'extrudeuse vers la zone de sortie et forme une section avec diamètre D1, une section avec diamètre D2 et une section avec diamètre D3. On pourra également utiliser un canal conique, c'est-à-dire de diamètre décroissant de manière continue. Le canal 8 est équipé d'une multitude d'ajutages 11 implantés radialement vers l'extérieur, destinés au passage de l'air à projeter.

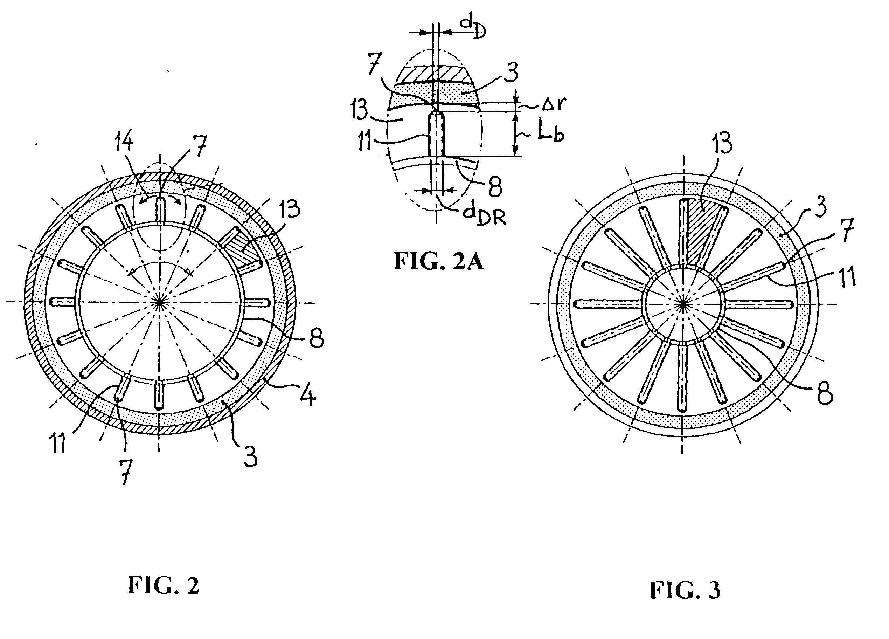

Comme montré aux figures 2 et 3, l'air est projeté perpendiculairement selon un flux primaire sur la surface intérieure de la paroi du tuyau 3 et les orifices de sortie 7 des ajutages 11 (fig. 2A) se trouvent près de la paroi intérieure du tuyau 3 en formation. L'air propulsé selon ce flux primaire butte contre la paroi, se distribue dans la zone de propulsion avant de s'écouler radialement vers le centre en s'unissant avec l'air propulsé par les ajutages voisins, pour ensuite être évacué, selon un flux d'air secondaire d'évacuation par l'espace annulaire 13 situé entre le canal 8 et la surface intérieure du tuyau 3.

Comme décrit ci-avant, le volume de cette espace annulaire ou zone 13 s'accentue vers le côté sortie de l'air. L'écoulement du flux secondaire de l'air est représenté par les flèches 14. La figure 2A montre le détail de l'ajutage 11, constitué d'une buse et l'orifice de sortie 7 proprement dit.

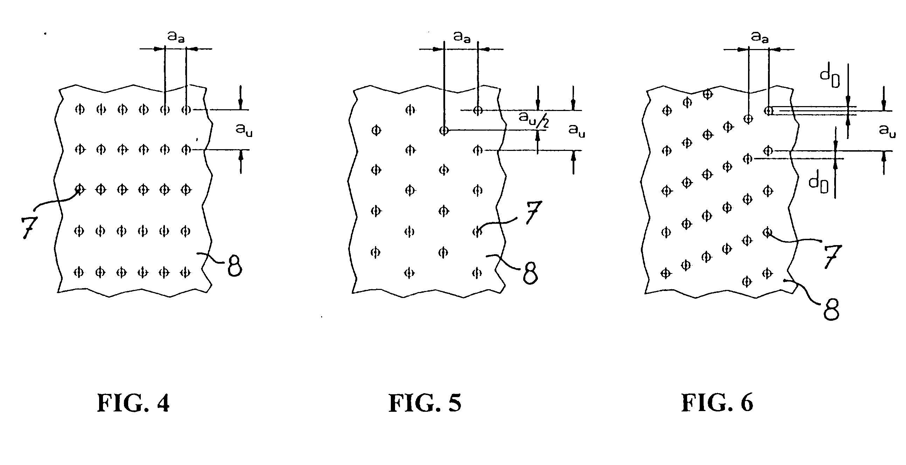

Sur les figures 2 et 3, on remarque la répartition périphérique des ajutages 11. Des variantes axiales de la configuration des ajutages sont représentées schématiquement aux figures 4, 5 et 6.

Le nombre d'ajutages disposés par circonférence est fonction du diamètre du tuyau plastique extrudé.

La figure 4 représente une configuration axiale à angles droits (ajutages 11 alignés de façon axiale) dans laquelle aₐ ≤ aᵤ (aₐ = distance axiale entre les ajutages 11 de deux rangées voisines; aᵤ = écartement des buses selon la circonférence).

Les figures 5 et 6 représentent des configurations d'ajutages décalées.

A la figure 5, aₐ = aᵤ et les ajutages 11 sont décalées d'une valeur aᵤ/2.

A la figure 6, aₐ ≤ aᵤ et le décalage, dans le sens axial, des ajutages 11 de deux rangées voisines est de d_{D} (diamètre de l'orifice 7 proprement dit de l'ajutage).

La configuration axiale et décalé des ajutages permet de projeter l'air de refroidissement perpendiculairement et avec une grande vitesse sur la surface intérieure du tuyau 3. Il faudra pour atteindre un C.T.T. (coefficient de transmission thermique) suffisamment élevé et pour obtenir un refroidissement interne efficace du tuyau que l'air soit projeté perpendiculairement sur la surface et à des vitesses pouvant aller jusqu'à 100 m/s.

La figure 2A indique les paramètres relevant de la technique des fluides et de celle du transfert de la chaleur qui sont pertinents pour les ajutages. Le rapport entre, d'une part, la distance (Δr) entre l'orifice 7 de l'ajutage 11 et la surface intérieure du tuyau 3 et, d'autre part, soit le diamètre de cet orifice (d_{D}), soit l'écartement des rangées des ajutages (aᵤ), Δr/d_{D} ou Δr/aᵤ, sont important pour obtenir un C.T.T. élevé. Il a été constaté que ce rapport Δr/d_{D} doit se situer entre 0.5 et 7 et de préférence entre 1 et 3. Le C.T.T. maximal est atteint pratiquement au point d'arrêt ou le jet d'air primaire butte contre la paroi 3. A partir de chaque point d'arrêt, l'air s'écoule dans toutes les directions selon une symétrie circonférentielle. Ces jets s'unissent à ceux provenant des ajutages voisins pour former ce qu'on appelle des points d'arrêt secondaires. L'air ainsi refoulé s'écoule ensuite dans l'espace annulaire 13 formé entre les ajutages 11 et entre la face extérieure du canal 8 et la surface intérieure de la paroi 3 du tuyau, tout en s'écartant de la tête d'extrusion selon un flux d'air secondaire d'évacuation 14.

Il est clair que l'espace annulaire d'écoulement 13 doit avoir des dimensions suffisamment grandes. En aucun cas, l'air qui s'écoule selon une direction axiale ne doit interférer dynamiquement avec les jets d'air primaires de refroidissement provenant des ajutages 11. Il faut donc que la longueur des ajutages 11 (L_{b}) soit suffisante.

Entre le point d'arrêt situé dans la zone des jets primaires , où il est maximal, et le point d'arrêt secondaire, le C.T.T. baisse constamment de sorte que le C.T.T. moyen des ajutages est nettement inférieur au C.T.T. maximal atteint au point d'arrêt des jets primaires. Par la sélection de l'écartement des ajutages aₐ et aᵤ et de l'agencement des ajutages (Fig. 4, 5, 6), le C.T.T. moyen instauré est tellement élevé qu'il garantit l'obtention de l'effet de refroidissement interne recherché.

Accessoirement, on peut également prévoir, à l'extrémité libre du canal 8, une tête de vaporisation 9 alimenté par de l'eau de refroidissement complémentaire amenée sous pression par un conduit 18 situé dans la partie central du canal 8.

Afin de projeter les gouttelettes au maximum contre la surface intérieure de la paroi du tuyau 3, qui est déjà partiellement refroidi et solidifié, on prévoit entre l'extrémité libre du canal 8 et la tête de vaporisation 9, des ailettes 10 pour guider et orienter l'écoulement du flux secondaire 14 de l'air de refroidissement dans un tourbillon hélicoïdal entraînant les gouttelettes par la force centrifuge contre la surface intérieure de la paroi 3.

Les ailettes 10 seront de préférence montées sur un tube 12 ayant le même diamètre que la dernière section du canal 8.

L'ensemble de la structure, composée de plusieurs sections de diamètre différents du canal 8, avec les ailettes d'orientation 10 et la tête de vaporisation 9, peut être disposé de façon immobile ou fixe à l'intérieur du tuyau 3 en formation. A cet effet, la longueur des différentes sections du canal 8 doit être suffisant pour obtenir un refroidissement efficace de la paroi interne du tuyau.

Les gouttelettes qui se déposeront sur la surface, déjà suffisamment formée et largement refroidie, de la paroi intérieure du tuyau 3 vont s'évaporer tout en retirant encore une grande quantité de calories de la chaleur latente dans les couches adjacentes de la masse de matière plastique formant la paroi du tuyau.

De la sorte, le volume total d'air de refroidissement fourni par un ventilateur ou une soufflerie à haute pression agit de façon thermodynamique avec la surface interne chaude du tuyau dans deux zones de C.T.T. différent. Le potentiel de refroidissement de l'air de refroidissement est donc utilisé de façon optimale. Derrière la structure du canal 8, l'air pourra remplir toute la section du tuyau 3 et s'écouler jusqu'à l'extrémité de celui-ci.

Selon une variante de réalisation, la structure du canal 8 équipé d'ajutages 11, et éventuellement d'ailettes d'orientation 10 et de la tête de vaporisation 9 peut se déplacer selon une direction axiale à l'intérieur du tuyau 3 suivant un mouvement de va et vient (flèche 15) à l'aide d'un système classique, par exemple à l'aide d'une crémaillère telle que décrite dans la demande de brevet de la Demanderesse EP 0614749.

La longueur du mouvement d'oscillation peut atteindre en substance deux à trois fois la longueur de l'ensemble du dispositif 8, 9 et 10.

La fréquence d'oscillation peut atteindre jusqu'à deux mouvements par seconde et de préférence de 0,1 à 0,5 par seconde.

Il est en outre avantageux d'avoir une oscillation rotative partielle (flèche 16) du dispositif 8, 9 et 10 d'amplitude relativement limitée, par exemple comprise entre 10° et 45°, et de basse fréquence, par exemple un demi jusque trois mouvements par seconde.

Sur le plan thermodynamique, l'oscillation axiale se justifie parce qu'elle permet de dissiper par unité de temps une quantité de chaleur plus grande que lorsque le dispositif de refroidissement est fixe.

Ce phénomène s'explique par l'écart de température moyen plus grand qui existe entre l'air de refroidissement et la surface interne de la paroi du tuyau 3.

En plus, lors d'un refroidissement intensif oscillant, la distribution et le relâchement des contraintes sur la section de la paroi du tube est plus avantageuse que lorsque le dispositif de refroidissement est stationnaire.

L'oscillation rotative partielle est avantageuse pour éviter les marques (altérations) optiques de la surface interne de la paroi du tuyau.

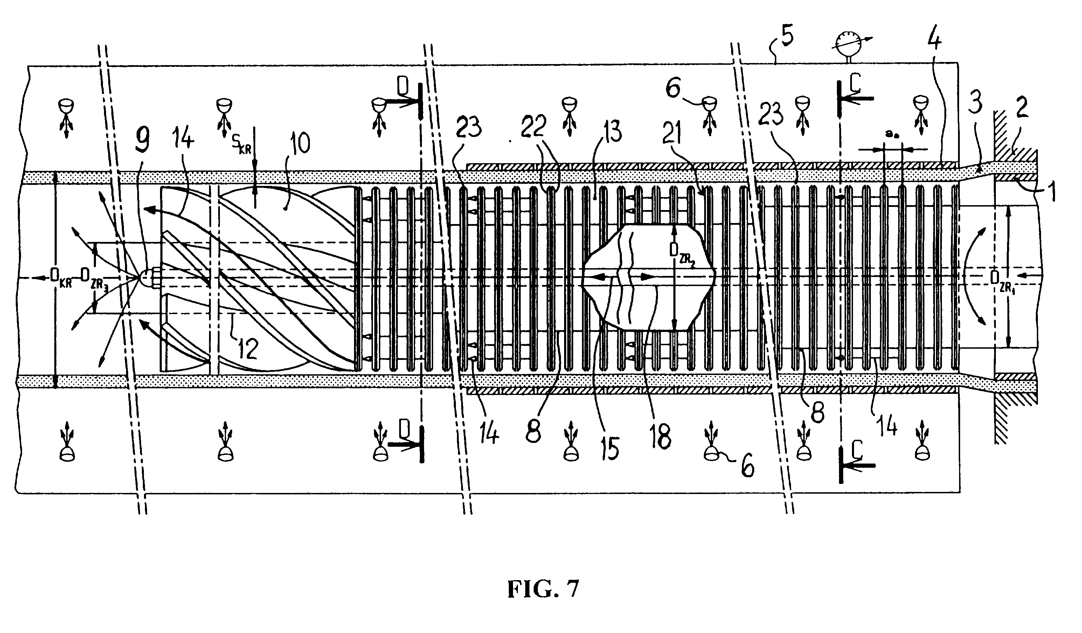

En se référant à la figure 7, celle-ci montre une variante de la figure 1 et comporte les mêmes éléments. Pour la simplicité du texte, les éléments qui sont semblables dans les figures 1 à 6 à ceux dans les figures 7 à 9 sont indiqués par les mêmes chiffres de références.

Au lieu d'être équipé d'ajutages 7, le canal 8 est équipé suivant cet exemple de disques 21 composés chacun de deux plaques circulaires 22 et présentant vers l'extérieur sur toute leur circonférence une fente circulaire 23 pour le passage de l'air. On obtient ainsi un passage circulaire réduit.

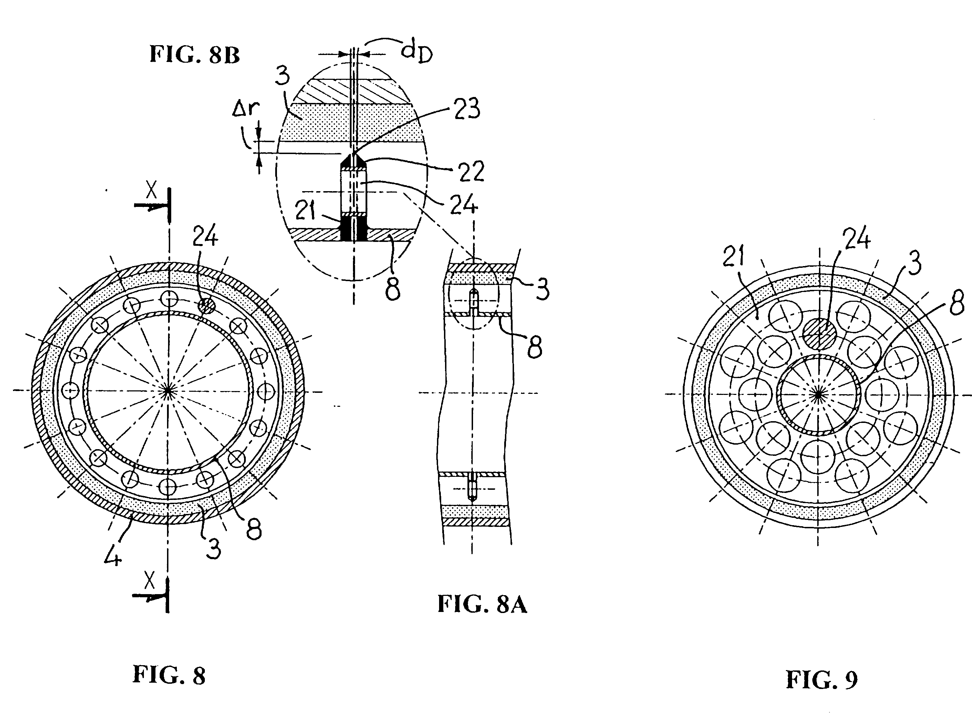

Ces disques 21 comportent des ouvertures 24 (figures 8, 8A et 9) pour le passage de l'air d'évacuation dans l'espace annulaire 13. Les considérations sur le C.T.T. décrites pour la figure 1 sont également valables pour cet exemple. L'air quittant la fente circulaire 23 lèche la surface intérieure de la paroi du tuyau 3 et s'écoule parallèlement à la paroi interne.

Dans cette variante, le dispositif peut également être équipé d'un circuit secondaire 18 de refroidissement par eau avec une tête de vaporisation 9 et des ailettes d'orientation 10 ainsi que des moyens de déplacements axiales. Un mouvement de rotation tel qu'une oscillation rotative n'est toutefois plus nécessaire étant donné que la fente circulaire couvre l'entière circonférence de la surface intérieure de la paroi du tuyau 3.

Il est clair que de nombreuses variantes sont possibles. Ainsi par exemple, on pourra prévoir sur une ou plusieurs parties du canal des ajutages et sur une ou plusieurs autres parties des fentes circulaires.

## Revendications

1. Procédé pour refroidir la surface intérieure de la paroi d'un tuyau (3) en matière plastique lors de sa fabrication par extrusion à l'aide d'une tête d'extrusion latérale suivant lequel on souffle de l'air sur la surface intérieure de la matière plastique sortant de la tête d'extrusion et qu'on refroidit également la surface extérieure de la paroi du tuyau (3) en formation,
caractérisé en ce que, pour le refroidissement interne, on projette tout près de la surface intérieure du tuyau (3) un gaz de refroidissement selon un flux primaire tout au long d'une zone de refroidissement qui s'étant axialement à partir de la sortie de la matière plastique de la tête d'extrusion latérale et en ce que cette projection primaire s'effectue en substance perpendiculairement par rapport à cette surface intérieure.

2. Procédé suivant la revendication 1, caractérisé en ce que cette projection de gaz de refroidissement s'effectue de façon immobile pendant l'avancement du tuyau (3) en cours de formation à la sortie de l'extrudeuse.

3. Procédé suivant la revendication 1, caractérisé en ce que cette projection de gaz de refroidissement s'effectue de façon mobile pendant l'avancement du tuyau en cours de formation à la sortie de l'extrudeuse.

4. Procédé suivant la revendication 1, caractérisé en ce que cette projection de gaz de refroidissement est obtenu par une série de projections primaires uniformément réparties sur la surface intérieure de la paroi (3) tout au long de la zone de refroidissement interne.

5. Procédé suivant la revendication 4, caractérisé en ce que l'ensemble des projections primaires sont évacué selon un flux de gaz secondaire qui s'écoule à partir de la tête d'extrusion jusqu'au delà de la zone de refroidissement.

6. Procédé suivant la revendication 1, caractérisé en ce que au delà de l'extrémité de la zone refroidie par les projections primaires de gaz de refroidissement, on vaporise un liquide de refroidissement et en ce que les particules du fluide de refroidissement sont entraînées par le flux secondaire du gaz de refroidissement pour être déposées sur la surface intérieure de la paroi du tuyau (3).

7. Dispositif pour le refroidissement de la paroi d'un tuyau (3) en matière plastique lors de sa fabrication par extrusion à l'aide d'une tête d'extrusion latérale (1, 2), muni de moyens (6, 8) pour aussi bien refroidir la surface extérieure que la surface intérieure de la paroi du tuyau (3),
caractérisé en ce que
pour le refroidissement interne, il comporte une structure ,telle qu'un canal (8), qui s'étend axialement à l'intérieur du tuyau (3) en formation sur toute la longueur d'une zone de refroidissement interne et en ce que ce canal (8) est pourvue de moyens (11,23) de projection de gaz de refroidissement primaire disposés en substance radialement sur le canal (8) de façon à ce que l'extrémité des moyens de projection primaires s'étendent jusqu'à une distance réduite de la surface intérieure de la paroi (3) du tuyau en formation.

8. Dispositif selon la revendication 7, caractérisé en ce que, le canal (8) est monté de manière à pouvoir se déplacer à l'intérieur du tuyau (3) en formation suivant un mouvement de va et vient axial (15) et/ou un mouvement de rotation partielle (16).

9. Dispositif suivant la revendication 7, caractérisé en ce que les moyens de projections primaires de gaz de refroidissement sont constitués par des buses ou ajutages (11) pourvues, à leurs extrémité, d'un orifice réduit (7) de sortie de gaz de refroidissement.

10. Dispositif suivant la revendication 7, caractérisé en ce que le rapport entre, d'une part, la distance entre l'orifice réduit (7) et la paroi du tuyau (3) et, d'autre part, le diamètre de l'orifice réduit (7) se situe entre 0.5 et 7 et de préférence entre 1 et 3.

11. Dispositif suivant la revendication 7, caractérisé en ce que les moyens de projection primaires de gaz de refroidissement sont des disques (21) composés de deux plaques circulaires (22) entre lesquelles est formée une fente circulaire (23).

12. Dispositif suivant la revendication 7, caractérisé en ce que le diamètre du canal (8) diminue au moins en partie graduellement ou progressivement à partir de l'extrudeuse le long de la zone de refroidissement créant ainsi un espace annulaire (13) dont le volume s'accentue vers le côté de sortie, favorisant l'écoulement du flux secondaire.

13. Dispositif suivant la revendication 7, caractérisé en ce que au delà de l'extrémité de la zone de refroidissement interne à l'aide des moyens de projection de gaz primaire (11, 23), le canal (8) est pourvu de moyens (9) de vaporisation d'un liquide de refroidissement.

14. Dispositif suivant la revendication 13, caractérisé en ce qu'il comporte, entre les moyens (9) de vaporisation et l'extrémité libre du canal (8), des moyens de guidage et d'orientation (10) destinés à créer un tourbillon hélicoïdal du flux d'évacuation de gaz secondaire, entraînant les gouttelettes de liquide de refroidissement , provenant des moyens de vaporisation (9), par la force centrifuge contre la surface intérieure de la paroi (3) du tuyau.

15. Tuyau en matière plastique obtenu par le procédé suivant l'une quelconque des revendications 1 à 6.
